# FASCICULE DE BREVET EUROPEEN

(11) **EP 3 942 322 B1**
(45) Date de publication et mention de la délivrance du brevet: **14.01.2026**
(21) Numéro de dépôt: 20725816.1
(22) Date de dépôt: 04.03.2020
(51) Int. Cl.: G01S 5/14, G01S 5/00

(54) **PROCÉDÉ ET DISPOSITIF DE DÉTERMINATION DE L'ACTIVITÉ D'AU MOINS UN VÉHICULE SE DÉPLAÇANT À L'INTÉRIEUR D'UNE ZONE COUVERTE**
VERFAHREN UND VORRICHTUNG ZUR BESTIMMUNG DER AKTIVITÄT MINDESTENS EINES SICH INNERHALB EINER ABGEDECKTEN ZONE BEWEGENDEN FAHRZEUGS
METHOD AND DEVICE FOR DETERMINING THE ACTIVITY OF AT LEAST ONE VEHICLE MOVING INSIDE A COVERED ZONE

(30) Priorité: 21.03.2019 FR 1902954
(43) Date de publication de la demande: 26.01.2022
(73) Titulaire: Stellantis Auto SAS, 78300 Poissy (FR)
(72) Inventeur: DELEBECQUE, Damien, 90000 BELFORT (FR)
(74) Mandataire: ESIP
(86) Numéro de dépôt international: PCT/FR2020/050426
(87) Numéro de publication internationale: WO 2020/188176

(56) Documents cités:
- WO-A1-2013/142896
- WO-A1-2017/041045
- WO-A2-2006/086398
- US-A1- 2016 023 675

## Description

### Domaine technique

L'invention concerne l'analyse et le suivi de l'activité d'un ou plusieurs véhicules, tels que des chariots élévateurs ou des machines de nettoyage, se déplaçant à l'intérieur d'une zone couverte, telle qu'un bâtiment ou un entrepôt par exemple. L'invention concerne également la gestion et l'optimisation de l'utilisation d'une flotte de véhicules.

### Arrière-plan technologique

Il est courant de nos jours d'utiliser des véhicules à l'intérieur de bâtiments, tels que des entrepôts, des usines de fabrication, des supermarchés ou encore des hôpitaux. De tels véhicules sont par exemple prévus pour faciliter le travail des personnes, améliorer les rendements, assurer l'entretien et/ou le nettoyage. De tels véhicules correspondent par exemple à des chariots élévateurs pour le transfert de charge dans des entrepôts de stockage ou des usines, des machines de nettoyage dans les supermarchés par exemple, des véhicules à guidage automatique (VGA) pour déplacer des marchandises dans une usine, un entrepôt, un hôpital ou un aéroport par exemple.

US 2016/023675 A1, par exemple , décrit un système permettant de contrôler ou de surveiller un parc de chariots de supermarché et de récupérateurs de chariots afin de collecter et de ramener les chariots depuis un parking situé à proximité du magasin vers une zone de collecte.

Avec l'augmentation de la taille et de la superficie de tels bâtiments, la quantité d'un ou plusieurs types de véhicules utilisés dans un bâtiment peut s'avérer important et engendrer des coûts (achat, entretien) élevés.

La gestion et l'analyse de l'utilisation d'une flotte de véhicules, par exemple des chariots élévateurs, utilisés dans une usine ou un entrepôt donné sont aujourd'hui le plus souvent basées sur des mesures effectuées par une ou plusieurs personnes en se basant sur l'observation et éventuellement des outils tels que des chronomètres et un plan du bâtiment. Cette solution est chronophage et source d'erreurs, entraînant une utilisation de la flotte de véhicule peu optimale, par exemple quant au nombre de véhicules utilisés par rapport aux besoins réels.

### Résumé de l'invention

Un objet de la présente invention est de proposer une solution pour déterminer l'activité d'un ou plusieurs véhicules évoluant à l'intérieur d'une zone couverte, par exemple dans le but d'optimiser le nombre de véhicules par rapport à l'utilisation réelle de chacun des véhicules.

Selon un premier aspect, l'invention concerne un procédé de détermination d'un état représentatif de l'activité d'au moins un véhicule se déplaçant à l'intérieur d'une zone couverte, la zone couverte comprenant une pluralité de points d'accès, le au moins un véhicule comprenant un dispositif mobile configuré pour communiquer avec la pluralité de points d'accès selon un protocole de communication sans fil, le procédé comprenant les étapes de :
- réception de premières données représentatives de signaux échangés avec au moins une partie de la pluralité de points d'accès, les premières données étant reçues du dispositif mobile ;
- réception de deuxièmes données représentatives de mouvement du dispositif mobile, les deuxièmes données étant obtenues d'au moins un accéléromètre associé au dispositif mobile et reçues du dispositif mobile ;
- détermination de l'état représentatif de l'activité du au moins un véhicule à partir des deuxièmes données, l'état étant associé à une information représentative de la localisation du au moins un véhicule dans la zone couverte, l'information représentative de la localisation étant obtenue à partir des premières données et d'informations représentatives de la localisation de chaque point d'accès de la au moins une partie de la pluralité de points d'accès,
pour lequel une information temporelle est associée aux premières données et aux deuxièmes données, l'information temporelle étant associée à l'état représentatif de l'activité du au moins un véhicule et à l'information représentative de la localisation, et pour lequel l'état représentatif de l'activité du au moins un véhicule correspond à un des états suivants :
- un état actif correspondant à un déplacement du au moins un véhicule ou à une immobilisation du au moins un véhicule pendant une durée inférieure à une valeur seuil ;
- un état inactif correspondant à une immobilisation du au moins un véhicule pendant une durée supérieure à la valeur seuil.

Selon une variante, le procédé comprend en outre une étape de détermination de la conformité du calculateur en fonction de l'information enregistrée dans la mémoire du calculateur.

Selon une autre variante, le véhicule est :
- à l'état actif lorsque la vitesse du véhicule est non nulle, la vitesse étant déterminée à partir des deuxièmes données ou à partir de l'information représentative de localisation, ou lorsque la vitesse du véhicule déterminée à partir de l'information représentative de localisation est nulle et les deuxièmes données sont non nulles ;
- à l'état inactif lorsque les deuxièmes données sont nulles pendant une durée supérieure à la valeur seuil, ou lorsque la vitesse du véhicule déterminée à partir de l'information représentative de localisation est nulle et les deuxièmes données sont nulles pendant une durée supérieure à la valeur seuil.

Selon encore une variante, les premières données comprennent une information représentative de l'intensité des signaux échangés avec chaque point d'accès de la au moins une partie de la pluralité de points d'accès.

Selon une autre variante, le procédé comprend en outre une étape de détermination d'un taux d'activité du au moins un véhicule à partir de l'état représentatif de l'activité du au moins un véhicule sur une période temporelle déterminée.

Selon encore une variante, le procédé comprend en outre une étape de génération d'une carte représentative de la durée et de la localisation de l'état inactif du au moins un véhicule.

Selon une variante supplémentaire, le protocole de communication sans fil correspond à IEEE 802.11.

Selon un deuxième aspect, l'invention concerne un dispositif de détermination d'un état représentatif de l'activité d'au moins un véhicule se déplaçant à l'intérieur d'une zone couverte, la zone couverte comprenant une pluralité de points d'accès, le au moins un véhicule comprenant un dispositif mobile configuré pour communiquer avec la pluralité de points d'accès selon un protocole de communication sans fil, le dispositif comprenant une mémoire associée à au moins un processeur configuré pour mettre en œuvre les étapes du procédé tel que décrit ci-dessus selon le premier aspect de l'invention. Selon un troisième aspect, l'invention concerne un système de détermination d'un état représentatif de l'activité d'au moins un véhicule se déplaçant à l'intérieur d'une zone couverte, le système comprenant un dispositif mobile associé à le au moins un véhicule, une pluralité de points d'accès arrangés spatialement dans la zone couverte et un dispositif de détermination d'un état représentatif de l'activité d'au moins un véhicule tel que décrit ci-dessus selon le deuxième aspect de l'invention, le dispositif mobile étant configuré pour communiquer avec la pluralité de points d'accès selon un premier protocole de communication sans fil, le dispositif mobile étant configuré pour communiquer avec le dispositif de détermination d'un état représentatif de l'activité d'au moins un véhicule selon un deuxième protocole de communication sans fil.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de l'invention ressortiront de la description des modes de réalisation non limitatifs de l'invention ci-après, en référence aux figures 1 à 3 annexées, sur lesquelles :
[Fig. 1] illustre de façon schématique une zone couverte dans laquelle évolue un véhicule, selon un exemple de réalisation particulier de la présente invention ;
[Fig. 2] illustre schématiquement un point d'accès arrangé dans la zone couverte de la figure 1 et/ou un dispositif de détermination de l'activité du véhicule de la figure 1, selon un exemple de réalisation particulier de la présente invention ;
[Fig. 3] illustre schématiquement un dispositif mobile équipant le véhicule de la figure 1, selon un exemple de réalisation particulier de la présente invention ;
[Fig. 4] illustre schématiquement un procédé de détermination d'un état représentatif de l'activité du véhicule de la figure 1 se déplaçant à l'intérieur de la zone couverte de la figure 1, selon un exemple de réalisation particulier de la présente invention.

### Description des modes de réalisation

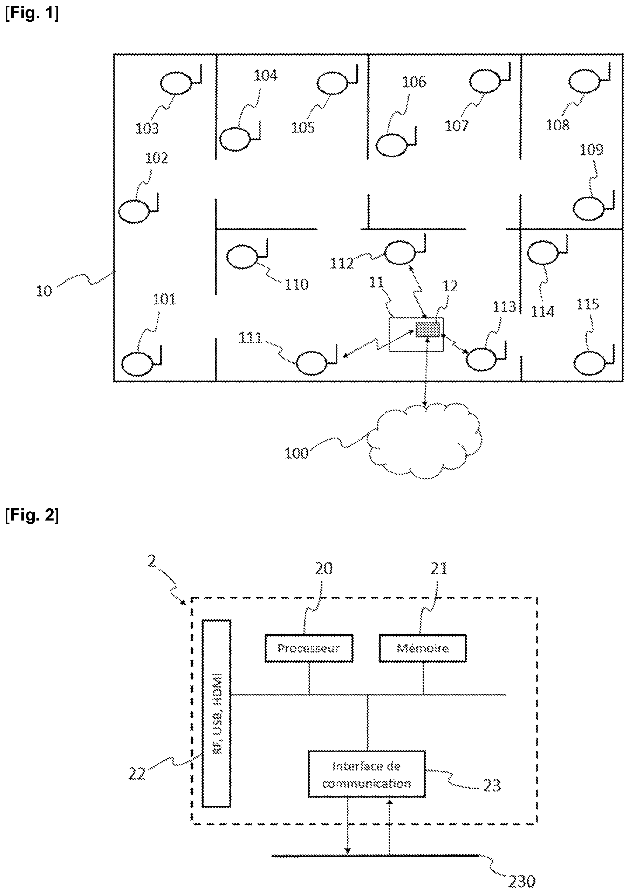

Un procédé de procédé de détermination d'un état représentatif de l'activité d'un véhicule se déplaçant à l'intérieur d'une zone couverte, le dispositif mettant en œuvre un tel procédé et un système mettant en œuvre un tel procédé vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de l'invention, un procédé de détermination d'un état représentatif de l'activité d'un ou plusieurs véhicules se déplaçant à l'intérieur d'une zone couverte est décrit. Plusieurs points d'accès sans fil (par exemple de type Wifi^{®}) sont arrangés spatialement dans la zone couverte (par exemple un bâtiment tel qu'un entrepôt ou une usine). Chaque véhicule est équipé d'un dispositif mobile, par exemple un téléphone intelligent (de l'anglais « smartphone ») ou une tablette, configuré pour communiquer avec les points d'accès selon un protocole de communication sans fil, par exemple conforme à IEEE 802.11. Des premières données représentatives de signaux échangés avec au moins une partie de la pluralité de points d'accès sont reçues du dispositif mobile, les premières données correspondant par exemple à l'intensité d'un signal reçu de chaque point d'accès couvrant la zone dans laquelle se situe le véhicule. Des deuxièmes données représentatives de mouvement (par exemple la vitesse ou le déplacement) du dispositif mobile sont reçues du dispositif mobile, les deuxièmes données étant obtenues d'au moins un accéléromètre associé au dispositif mobile. L'état représentatif de l'activité du véhicule est déterminé à partir des deuxièmes données, le véhicule pouvant par exemple être dans un état actif ou dans un état inactif. L'état dans lequel se trouve le véhicule à un instant déterminé est avantageusement associé à une information représentative de la localisation du véhicule dans la zone couverte. Cette information représentative de la localisation est obtenue à partir des premières données et d'informations représentatives de la localisation des points d'accès couvrant la zone dans laquelle se situe le véhicule à l'instant déterminé.

La détermination de l'état (par exemple actif ou inactif) du véhicule associé à sa localisation dans la zone couverte permet par exemple de déterminer des informations telles que son taux d'utilisation ou d'immobilisation et ses déplacements dans la zone couverte. Ces informations, déterminées par exemple pour chaque véhicule d'une flotte de véhicule, permettent par exemple de déterminer si le nombre de véhicules présents dans la zone couverte est supérieure ou inférieure aux besoins.

[Fig. 1] illustre de façon schématique une zone couverte 10 dans laquelle évoluent un ou plusieurs véhicules, selon un exemple de réalisation particulier et non limitatif de la présente invention.

La figure 1 illustre un réseau de communication sans fil déployé dans un espace couvert 10 correspondant par exemple à l'intérieur d'un bâtiment tel qu'un entrepôt, une usine, un supermarché ou un aéroport. Le réseau de communication sans fil comprend plusieurs points d'accès sans fil 101 à 115 répartis géographiquement pour couvrir en émission et en réception de signaux radiofréquences tout l'espace couvert 10. Ainsi, un dispositif mobile se déplaçant à l'intérieur de la zone couverte 10 peut accrocher un ou plusieurs points d'accès à tout moment et échanger avec ces derniers des signaux radiofréquences transportant des données à destination du dispositif mobile ou des points d'accès 101 à 115. La zone couverte 10 est divisée en plusieurs zones formées par des parois telles que des murs ou des rayonnages illustrées par des traits pleins à l'intérieur de la zone couverte 10. Un véhicule 11 de type chariot élévateur, machine de nettoyage ou VGA par exemple se déplace à l'intérieur de la zone couverte 10. Ce véhicule 11 est équipé d'un dispositif mobile 12, par exemple un téléphone intelligent ou une tablette, adapté pour communiquer avec les points d'accès 101 à 115 via un canal de communication sans fil. La communication entre le dispositif mobile 12 et les points d'accès 101 à 115 s'établit selon un protocole de communication sans fil tel que Wifi^{®} (selon IEEE 802.11), par exemple dans les bandes de fréquence à 2,4 ou 5 GHz, ou Bluetooth (selon IEEE 802.15.1), dans la bande de fréquence à 2,4 GHz.

Les points d'accès sans fil 101 à 115 sont reliés entre eux par une liaison filaire (ou « backbone » en anglais), par exemple du type MoCA (de l'anglais « Multimedia over Coax Alliance » ou en français « Alliance multimédia sur coax »), Ethernet, PLC (de l'anglais « Powerline Communication » ou en français CPL « Courants Porteurs en Ligne »), POF (de l'anglais « Plastic Optical Fiber » ou en français « Fibre optique plastique) ou encore ITU G.hn (correspondant au standard pour les technologies de réseaux domestiques de prochaine génération de ITU, de l'anglais « International Telecommunication Union » ou en français « Union internationale des télécommunications »).

Selon l'exemple de la figure 1, le véhicule 11 et le dispositif mobile associé 12 se trouvent dans les zones de couverture radiofréquence des points d'accès 111, 112 et 113. Le dispositif mobile 12 reçoit des signaux de chacun de ces points d'accès 111, 112 et 113 (par exemple des trames balises (de l'anglais « beacon »), par exemple pour déterminer à quel point d'accès il va s'accrocher pour communiquer des données, par exemple en fonction de la force du signal émis par chaque point d'accès, de la bande passante disponible au niveau de chacun des points d'accès 111, 112, 113. Le dispositif mobile 12 peut ainsi déterminer le RSSI (de l'anglais « Received Signal Strength Indicator » ou en français « Indicateur de puissance de signal reçu ») du signal reçu de chaque point d'accès 111, 112 et 113 et décode le signal pour en extraire l'identifiant de chaque point d'accès 111, 112 et 113 émetteur du signal. Le dispositif mobile 12 peut ainsi déterminer sa position relativement à chaque point d'accès, par exemple en déterminant la distance qui le sépare de chaque point d'accès en se basant sur le RSSI déterminé pour chaque point d'accès 111, 112 et 113.

Le dispositif mobile 12 comprend avantageusement un ou plusieurs capteurs inertiels, par exemple un ou plusieurs accéléromètres, qui mesurent les accélérations linéaires de ces derniers, correspondant aux accélérations linéaires du véhicule 11 transportant le dispositif mobile 12. Il est alors possible de déterminer, à partir de ces informations d'accélérations linéaires, des informations sur la vitesse du véhicule (par intégration des informations d'accélération) et des informations sur les déplacements du véhicule (par double intégration des informations d'accélération).

Le dispositif mobile 12 est également en communication sans fil avec un dispositif distant 100, par exemple le « cloud » (ou « nuage » en français). Le dispositif mobile 12 transmet des premières données représentatives des signaux échangés avec les points d'accès 111 à 113 (par exemple le RSSI et l'identifiant de chaque point d'accès 111 à 113). Le dispositif mobile 12 transmet également des deuxièmes données représentatives du mouvement du dispositif mobile 12 (et in fine du véhicule 11), par exemple les mesures du ou des accéléromètres ou les informations de vitesse ou de déplacement déterminées par le dispositif mobile 12. Le dispositif mobile 12 communique avec le dispositif distant 100 en utilisant par exemple une connexion sans fil utilisée dans un réseau mobile tel qu'un réseau 4G (ou LTE Advanced selon 3GPP release 10 - version 10) ou 5G.

Selon une variante, le dispositif mobile 12 n'est pas en communication directe avec le dispositif distant 100. Selon cette variante, le dispositif distant 100 est connecté au réseau de points d'accès 101 à 115, par exemple via une passerelle (de l'anglais « gateway ») connecté à la liaison filaire (ou « backbone ») reliant les points d'accès entre eux. Selon cette variante, le dispositif mobile 12 transmet les premières données et les deuxièmes données à un des points d'accès, par exemple le point d'accès 113, qui les relaie au dispositif distant 100 via la connexion filaire et la passerelle.

Le dispositif distant 100 détermine la position géographique du dispositif mobile 12 (et in fine du véhicule 11) à partir des premières données, en s'appuyant par exemple sur une information représentative de la position spatiale de chacun des points d'accès 101 à 115 dans la zone couverte 10 (correspondant par exemple aux coordonnées x, y et z de chaque point d'accès dans un repère absolu (dit repère monde) ou dans un repère associé à la zone couverte 10). Cette position est déterminée par exemple à différents instant t (par exemple à intervalle régulier, par exemple toutes les secondes ou toutes les 40, 100, 500 millisecondes) ou à tout instant, les premières données étant avantageusement horodatées, c'est-à-dire chaque information sur la qualité du signal reçu par le dispositif mobile 12 de chaque point d'accès 111 à 113 est associée à une information temporelle (obtenue par exemple de l'horloge du dispositif mobile 12). La zone 10 étant couverte, la position du véhicule dans la zone couverte 10 ne peut pas être déterminée avec un système satellitaire de type GPS (de l'anglais « Global Positioning System », ou « Système mondial de positionnement » en français).

Selon une variante, la position géographique du véhicule 11 est associée à une cartographie de la zone couverte 10 et matérialisée sur une carte de la zone couverte 10.

Le dispositif distant 100 détermine également un état représentatif de l'activité du véhicule 11 à partir des deuxièmes données représentatives de mouvement du dispositif mobile 12, obtenues du ou des accéléromètres associés au dispositif mobile 12. L'état représentatif de l'activité du véhicule 11 correspond à l'un ou l'autre des états suivants :
- un état actif correspondant à un état dans lequel le véhicule est en fonctionnement et utilisé pour effectuer des tâches ; l'état actif correspond à un état dans lequel le véhicule est mobile (c'est-à-dire en mouvement avec une vitesse non nulle), la mobilité du véhicule étant par exemple déterminée à partir des premières données ; l'état actif correspond également à un état dans lequel le véhicule est immobile (c'est-à-dire sans mouvement avec une vitesse nulle), l'immobilité du véhicule étant déterminée à partir des premières données par exemple, mais avec des deuxièmes données provenant du ou des accéléromètres non nulles, ce deuxième cas de figure correspondant par exemple au cas où le véhicule est actif même si sa position géographique ne change pas (par exemple un car à fourche chargeant un casier sur un rayonnage) ;
- un état inactif correspondant à un état dans lequel le véhicule n'est pas en fonctionnement et n'est pas utilisé pour effectuer une tâche ; l'état inactif correspond à un état dans lequel le véhicule est immobile (c'est-à-dire sans mouvement avec une vitesse nulle), l'immobilité étant par exemple déterminée à partir des premières données, et dans lequel les deuxièmes données dont nulles pendant une durée supérieure à une valeur déterminée (dite aussi valeur seuil), par exemple 10, 20 ou 30 secondes ; un véhicule est déterminé comme étant dans l'état inactif lorsqu'il remplit les 2 critères : immobilité géographique déterminée à partir des premières données et deuxièmes données provenant du ou des accéléromètres nulles pendant une durée supérieure à la valeur seuil.

L'état du véhicule 11 est déterminé par exemple à différents instant t (par exemple à intervalle régulier, par exemple toutes les secondes ou toutes les 40, 100, 500 millisecondes) ou à tout instant, les deuxièmes données étant avantageusement horodatées, c'est-à-dire chaque information sur le mouvement du dispositif mobile 12 est associée à une information temporelle (obtenue par exemple de l'horloge du dispositif mobile 12). L'état du véhicule 11 à un instant t est avantageusement associé à sa position géographique au même instant t.

Selon une variante, l'état actif et/ou l'état inactif sont associés à une cartographie de la zone couverte 10 et matérialisés sur une carte de la zone couverte 10, par exemple avec des couleurs, générant ainsi une carte de chaleur (de l'anglais « heatmap »). Par exemple, l'état inactif est matérialisé géographiquement sur la carte en utilisant des couleurs représentatives de la durée d'inactivité (par exemple vert si le véhicule est actif, orange lorsque le véhicule est inactif pour une durée inférieure à quelques minutes ou dizaines de minutes et rouge lorsque le véhicule est inactif pendant plusieurs dizaines de minutes ou plus).

Bien entendu, plusieurs véhicules tels que le véhicule 11 peuvent se déplacer dans la zone couverte 10, un état représentatif de l'activité associé à une localisation du véhicule dans la zone couverte étant déterminés pour chaque véhicule, par exemple pour analyser l'activité de l'ensemble des véhicules en regard des besoins et déterminer par exemple si la flotte de véhicule peut être réduite ou non.

[Fig. 2] illustre schématiquement un dispositif 2, selon un exemple de réalisation particulier et non limitatif de la présente invention. Le dispositif 2 correspond par exemple à un point d'accès 101 à 115 et/ou au dispositif distant 100 (par exemple une tablette, un téléphone intelligent, un serveur, un ordinateur).

Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels. Selon différents modes de réalisation particuliers, le dispositif 2 est couplé en communication avec d'autres dispositifs ou systèmes similaires, par exemple par l'intermédiaire d'un bus de communication ou au travers de ports d'entrée / sortie dédiés.

Le dispositif 2 comprend un (ou plusieurs) processeur(s) 20 configurés pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21, correspondant par exemple à une mémoire volatile et/ou non volatile.

La mémoire 21 comprend par exemple des paramètres associés à l'exécution du ou des logiciels embarqués. La mémoire 21 comprend en outre les premières et deuxièmes données. Le code informatique du ou des logiciels embarqués comprenant les instructions à charger et exécuter par le processeur est par exemple stocké sur la mémoire 21.

Selon un mode de réalisation particulier et non limitatif, le dispositif 2 comprend un bloc 22 d'éléments d'interface pour communiquer avec des dispositifs externes, par exemple un dispositif mobile tel que le dispositif mobile 12. Les éléments d'interface du bloc 22 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français).

Selon un autre mode de réalisation particulier, le dispositif 2 comprend une interface de communication 23 qui permet d'établir une communication avec d'autres dispositifs (tels que des points d'accès) via un canal de communication 230. L'interface de communication 23 correspond par exemple à un transmetteur configuré pour transmettre et recevoir des informations et/ou des données via le canal de communication 230. Le canal de communication 230 correspond par exemple à un réseau filaire de type « backbone » (ou « épine dorsale » en français).

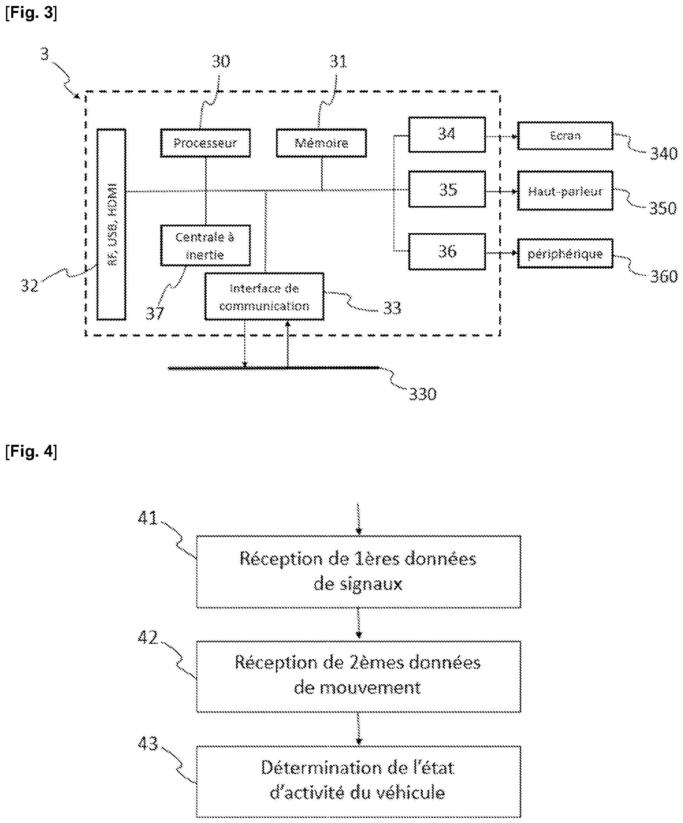

[Fig. 3] illustre schématiquement un dispositif 3 correspondant par exemple au dispositif mobile 12 équipant le véhicule 11, selon un exemple de réalisation particulier et non limitatif de la présente invention. Des exemples d'un tel dispositif 3 comprennent, sans y être limités, différents appareils électroniques tels qu'un téléphone intelligent (de l'anglais « smartphone »), une tablette, un ordinateur portable, un équipement électronique embarqué dans le véhicule 11. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31, par une mémoire volatile at/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique comprenant les instructions à charger et exécuter par le processeur est par exemple stocké sur la mémoire ou le dispositif de stockage mémoire 31.

Selon un mode de réalisation particulier et non limitatif, le dispositif 3 comprend un bloc 32 d'éléments d'interface pour communiquer avec des dispositifs externes, par exemple le dispositif distant 100 ou un ou plusieurs points d'accès 101 à 115. Les éléments d'interface du bloc 32 comprennent une ou plusieurs des interfaces suivantes :
- interface radiofréquence RF, par exemple de type Bluetooth^{®} ou Wi-Fi^{®} ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français).

Selon un autre mode de réalisation particulier, le dispositif 3 comprend une interface de communication 33 qui permet d'établir une communication avec d'autres dispositifs. L'interface de communication 33 correspond par exemple à un transmetteur configuré pour transmettre et recevoir des informations et/ou des données via le canal de communication 330. L'interface de communication 33 comprend par exemple un modem et/ou une carte réseau et le canal de communication peut par exemple être mis en œuvre dans un medium filaire et/ou sans fil.

Des données sont par exemples échangées avec le dispositif 2 en utilisant un réseau Wi-Fi^{®} tel que selon IEEE 802.11 ou un réseau mobile tel qu'un réseau 4G (ou LTE Advanced selon 3GPP release 10 - version 10) ou 5G.

Le dispositif 3 comprend également une centrale à inertie 37 (de l'anglais IMU « Inertial Measurement Unit ») qui comprend un ou plusieurs accéléromètres.

Selon un mode de réalisation particulier supplémentaire, le dispositif 3 peut fournir des signaux de sortie à un ou plusieurs dispositifs externes, tels qu'un écran d'affichage 340, un ou des haut-parleurs 350 et/ou d'autres périphériques 360 (système de projection) via respectivement des interfaces de sortie 34, 35 et 36. Selon une variante, l'un ou l'autre des dispositifs externes est intégré au dispositif 3. L'écran d'affichage 340 correspond par exemple à l'écran, tactile ou non.

[Fig. 4] illustre un organigramme des différentes étapes d'un procédé de détermination d'un état représentatif de l'activité d'un véhicule, selon un exemple de réalisation particulier et non limitatif de la présente invention. Le procédé est par exemple mis en œuvre par le dispositif distant 100. Selon une variante de réalisation, le procédé est mis en œuvre dans le dispositif mobile 12.

Dans une première étape 41, des premières données représentatives de signaux échangés avec un ou plusieurs points d'accès sont reçues d'un dispositif mobile équipant un véhicule se déplaçant à l'intérieur d'une zone couverte. Le ou les points d'accès avec lequel le dispositif mobile échange un ou plusieurs signaux radioélectriques appartiennent à un réseau de points d'accès localisés et répartis spatialement dans la zone couverte. Les premières données correspondent par exemple à une information représentative de l'intensité des signaux échangés avec chaque point d'accès, par exemple le RSSI établi à partir d'une trame de balise reçue de chaque point d'accès dont la zone de couverture couvre la position du véhicule.

Dans une deuxième étape 42, des deuxièmes données représentatives de mouvement du dispositif mobile sont reçues du dispositif mobile. Ces deuxièmes données sont avantageusement obtenues d'au moins un accéléromètre associé au dispositif mobile.

Dans une troisième étape 43, un état représentatif de l'activité du véhicule à partir des deuxièmes données. L'état représentatif de l'activité du véhicule est avantageusement associé à une information représentative de la localisation du véhicule dans la zone couverte, l'information représentative de la localisation étant obtenue à partir des premières données et d'informations représentatives de la localisation de chaque point d'accès en communication avec le dispositif mobile.

L'état associé au véhicule correspond par exemple à un état actif ou à un état inactif. L'état du véhicule est déterminé comme étant actif lorsque :
- le véhicule est en mouvement, c'est-à-dire que sa vitesse est non nulle. La vitesse est par exemple déterminée à partir des deuxièmes données obtenues du ou des accéléromètres ou à partir de l'information de localisation obtenue à partir des premières données. Selon une variante, la vitesse est déterminée en utilisant les deuxièmes données et l'information de localisation ; ou
- le véhicule est immobile, c'est-à-dire que sa vitesse déterminée à partir de l'information de localisation est nulle (c'est-à-dire que la localisation du véhicule est fixe) mais les deuxièmes données obtenues du ou des accéléromètres sont non nulles. Ce deuxième cas de figure correspond au cas où le véhicule effectue des manœuvres en restant à la même localisation.

L'état du véhicule est déterminé comme étant inactif lorsque :
- le véhicule est immobile pendant une durée supérieure à une valeur seuil, c'est-à-dire que sa vitesse est nulle. La vitesse est par exemple déterminée à partir des deuxièmes données obtenues du ou des accéléromètres ou à partir de l'information de localisation obtenue à partir des premières données. Selon une variante, la vitesse est déterminée en utilisant les deuxièmes données et l'information de localisation ; ou
- le véhicule est immobile, c'est-à-dire que sa vitesse déterminée à partir de l'information de localisation est nulle (c'est-à-dire que la localisation du véhicule est fixe) et les deuxièmes données obtenues du ou des accéléromètres sont nulles pendant une durée supérieure à la valeur seuil.

Selon une variante de réalisation, des premières et deuxièmes données sont par exemple associées à plusieurs véhicules se déplaçant dans la zone couverte, chaque véhicule étant équipé d'un dispositif mobile transmettant les premières et deuxièmes données à une unité (par exemple un dispositif distant ou un des dispositifs mobiles équipant un des véhicules) centralisant les informations et déterminant l'état de chaque véhicule.

Selon une autre variante de réalisation, le procédé comprend en outre la détermination d'un taux d'activité du véhicule à partir de l'état représentatif de l'activité du véhicule sur une période temporelle déterminée (par exemple quelques heures, 1 journée ou plusieurs jours). Par exemple, le taux d'activité correspond au ratio du temps pendant lequel le véhicule est à l'état actif sur la durée de la période temporelle déterminée.

Selon une autre variante de réalisation, le procédé comprend en outre la génération d'une carte représentative de la durée pendant laquelle le véhicule est à l'état inactif associée à l'information de localisation du véhicule. La carte correspond par exemple à une carte de chaleur.

Bien entendu, l'invention ne se limite pas aux modes de réalisation décrits ci-avant mais s'étend à un procédé de gestion et/ou d'optimisation d'une flotte de plusieurs véhicules prenant en compte l'état d'activité de chaque véhicule sur une période temporelle données, et au dispositif configuré pour la mise en œuvre d'un tel procédé de gestion et/ou d'optimisation.

L'invention concerne également un système comprenant le véhicule, le dispositif mobile embarqué sur le véhicule et un réseau de points d'accès. Selon une variante, le système comprend en outre un dispositif distant recevant les premières et deuxièmes données transmises par le dispositif mobile.

## Revendications

1. Procédé de détermination d'un état représentatif de l'activité d'au moins un véhicule (11) se déplaçant à l'intérieur d'une zone couverte (10), ladite zone couverte (10) comprenant une pluralité de points d'accès (101 à 115), ledit au moins un véhicule (11) comprenant un dispositif mobile (12) configuré pour communiquer avec ladite pluralité de points d'accès (101 à 115) selon un protocole de communication sans fil, ledit procédé comprenant les étapes de :
- réception (41) de premières données représentatives de signaux échangés avec au moins une partie (111 à 113) de la pluralité de points d'accès, lesdites premières données étant reçues dudit dispositif mobile ;
- réception (42) de deuxièmes données représentatives de mouvement dudit dispositif mobile (12), lesdites deuxièmes données étant obtenues d'au moins un accéléromètre (37) associé audit dispositif mobile et reçues dudit dispositif mobile ;
- détermination (43) de l'état représentatif de l'activité dudit au moins un véhicule (11) à partir desdites deuxièmes données, ledit état étant associé à une information représentative de la localisation dudit au moins un véhicule (11) dans la zone couverte (10), l'information représentative de la localisation étant obtenue à partir desdites premières données et d'informations représentatives de la localisation de chaque point d'accès (111 à 113) de ladite au moins une partie de la pluralité de points d'accès, caractérisé en ce une information temporelle est associée auxdites premières données et auxdites deuxièmes données, l'information temporelle étant associée audit état représentatif de l'activité dudit au moins un véhicule (11) et à ladite information représentative de la localisation, ledit état représentatif de l'activité dudit au moins un véhicule (11) correspond à un des états suivants :
- un état actif correspondant à un déplacement dudit au moins un véhicule ou à une immobilisation dudit au moins un véhicule pendant une durée inférieure à une valeur seuil ;
- un état inactif correspondant à une immobilisation dudit au moins un véhicule pendant une durée supérieure à ladite valeur seuil.

2. Procédé selon la revendication 1, pour lequel ledit véhicule est :
- à l'état actif lorsque la vitesse dudit véhicule est non nulle, ladite vitesse étant déterminée à partir des deuxièmes données ou à partir de ladite information représentative de localisation, ou lorsque la vitesse dudit véhicule déterminée à partir de ladite information représentative de localisation est nulle et les deuxièmes données sont non nulles ;
- à l'état inactif lorsque les deuxièmes données sont nulles pendant une durée supérieure à ladite valeur seuil, ou lorsque la vitesse dudit véhicule déterminée à partir de ladite information représentative de localisation est nulle et les deuxièmes données sont nulles pendant une durée supérieure à ladite valeur seuil.

3. Procédé selon la revendication 1, pour lequel lesdites premières données comprennent une information représentative de l'intensité des signaux échangés avec chaque point d'accès (111 à 113) de ladite au moins une partie de la pluralité de points d'accès.

4. Procédé selon l'une quelconque des revendications 1 à 2, comprenant en outre une étape de détermination d'un taux d'activité dudit au moins un véhicule (11) à partir dudit état représentatif de l'activité dudit au moins un véhicule sur une période temporelle déterminée.

5. Procédé selon l'une quelconque des revendications 1 à 3, comprenant en outre une étape de génération d'une carte représentative de la durée et de la localisation de l'état non actif dudit au moins un véhicule (11).

6. Dispositif (2) de détermination d'un état représentatif de l'activité d'au moins un véhicule se déplaçant à l'intérieur d'une zone couverte, ladite zone couverte comprenant une pluralité de points d'accès, ledit au moins un véhicule comprenant un dispositif mobile configuré pour communiquer avec ladite pluralité de points d'accès selon un protocole de communication sans fil, ledit dispositif comprenant une mémoire (21) associée à au moins un processeur (20) configuré pour mettre en œuvre les étapes du procédé selon l'une quelconque des revendications 1 à 5.

7. Système de détermination d'un état représentatif de l'activité d'au moins un véhicule se déplaçant à l'intérieur d'une zone couverte, ledit système comprenant un dispositif mobile (12) associé audit au moins un véhicule (11), une pluralité de points d'accès (101 à 115) arrangés spatialement dans ladite zone couverte et un dispositif (100) de détermination d'un état représentatif de l'activité d'au moins un véhicule selon la revendication 6, ledit dispositif mobile étant configuré pour communiquer avec ladite pluralité de points d'accès selon un premier protocole de communication sans fil, ledit dispositif mobile étant configuré pour communiquer avec ledit dispositif de détermination d'un état représentatif de l'activité d'au moins un véhicule selon un deuxième protocole de communication sans fil.

8. Produit programme d'ordinateur comportant des instructions adaptées pour l'exécution des étapes du procédé selon l'une des revendications 1 à 5, lorsque le programme d'ordinateur est exécuté par au moins un processeur.

## Patentansprüche

1. Verfahren zur Bestimmung eines Zustands, der die Aktivität mindestens eines Fahrzeugs (11) repräsentiert, das sich innerhalb eines abgedeckten Bereichs (10) bewegt, wobei der abgedeckte Bereich (10) eine Vielzahl von Zugangspunkten (101 bis 115) umfasst, wobei das mindestens eine Fahrzeug (11) ein mobiles Gerät (12) umfasst, das so konfiguriert ist, dass es gemäß einem drahtlosen Kommunikationsprotokoll mit der Vielzahl von Zugangspunkten (101 bis 115) kommunizieren kann, wobei das Verfahren die folgenden Schritte umfasst:
- Empfangen (41) erster Daten, die repräsentativ für die mit mindestens einem Teil (111 bis 113) der Vielzahl von Zugangspunkten ausgetauschten Signale sind, wobei die ersten Daten von dem mobilen Gerät empfangen werden;
- Empfangen (42) zweiter Daten, die repräsentativ für die Bewegung des mobilen Geräts (12) sind, wobei die zweiten Daten von mindestens einem mit dem mobilen Gerät verbundenen Beschleunigungsmesser (37) erfasst und von diesem empfangen werden;
- Bestimmung (43) des repräsentativen Zustands der Aktivität des mindestens einen Fahrzeugs (11) aus den zweiten Daten, wobei dieser Zustand mit Informationen verknüpft ist, die den Standort des mindestens einen Fahrzeugs (11) im abgedeckten Bereich (10) repräsentieren, wobei die Standortinformationen aus den ersten Daten und den Standortinformationen jedes Zugangspunkts (111 bis 113) der mindestens einen Teil der Vielzahl von Zugangspunkten gewonnen werden,
**gekennzeichnet dadurch, dass** den ersten und zweiten Daten zeitliche Informationen zugeordnet sind, wobei die zeitlichen Informationen dem Zustand zugeordnet sind, der die Aktivität des mindestens einen Fahrzeugs (11) darstellt, und den Informationen, die den Standort darstellen, und wobei der Zustand, der die Aktivität des mindestens einen Fahrzeugs (11) darstellt, einem der folgenden Zustände entspricht:
- einem aktiven Zustand, der einer Bewegung des mindestens einen Fahrzeugs oder einem Stillstand des mindestens einen Fahrzeugs für einen Zeitraum unterhalb eines Schwellenwerts entspricht;
- einem inaktiven Zustand, der einem Stillstand des mindestens einen Fahrzeugs für einen Zeitraum oberhalb des Schwellenwerts entspricht.

2. Verfahren nach Anspruch 1, wobei sich das Fahrzeug:
- im aktiven Zustand befindet, wenn die Geschwindigkeit des Fahrzeugs ungleich Null ist, wobei die Geschwindigkeit aus den zweiten Daten oder aus den repräsentativen Standortinformationen bestimmt wird, oder wenn die aus den repräsentativen Standortinformationen bestimmte Geschwindigkeit des Fahrzeugs Null ist und die zweiten Daten ungleich Null sind;
- im inaktiven Zustand befindet, wenn die zweiten Daten für eine Dauer, die den Schwellenwert überschreitet, Null sind oder wenn die aus den repräsentativen Standortinformationen bestimmte Geschwindigkeit des Fahrzeugs Null ist und die zweiten Daten für eine Dauer, die den Schwellenwert überschreitet, Null sind.

3. Verfahren nach Anspruch 1, wobei die ersten Daten Informationen umfassen, die repräsentativ für die Intensität der mit jedem Zugangspunkt (111 bis 113) der mindestens einen Teil der Vielzahl von Zugangspunkten ausgetauschten Signale sind.

4. Verfahren nach einem der Ansprüche 1 oder 2, ferner umfassend einen Schritt der Ermittlung einer Aktivitätsrate des mindestens einen Fahrzeugs (11) aus dem genannten Zustand, die repräsentativ für die Aktivität des mindestens einen Fahrzeugs über einen bestimmten Zeitraum ist.

5. Verfahren nach einem der Ansprüche 1 bis 3, ferner umfassend den Schritt der Erzeugung einer Karte, die die Dauer und den Ort des inaktiven Zustands des mindestens einen Fahrzeugs (11) darstellt.

6. Vorrichtung (2) zur Bestimmung eines Zustands, der die Aktivität mindestens eines Fahrzeugs repräsentiert, das sich innerhalb eines abgedeckten Bereichs bewegt, wobei der abgedeckte Bereich eine Vielzahl von Zugangspunkten umfasst, wobei das mindestens eine Fahrzeug ein Mobilgerät umfasst, das so konfiguriert ist, dass es mit der Vielzahl von Zugangspunkten gemäß einem drahtlosen Kommunikationsprotokoll kommunizieren kann, wobei die Vorrichtung einen Speicher (21) umfasst, der mit mindestens einem Prozessor (20) verbunden ist, der so konfiguriert ist, dass er die Schritte des Verfahrens gemäß einem der Ansprüche 1 bis 5 ausführt.

7. System zur Bestimmung eines Zustands, der die Aktivität mindestens eines Fahrzeugs innerhalb eines abgedeckten Bereichs repräsentiert, wobei das System ein mit dem mindestens einen Fahrzeug (11) verbundenes Mobilgerät (12), mehrere räumlich im abgedeckten Bereich angeordnete Zugangspunkte (101 bis 115) und ein Gerät (100) zur Bestimmung eines Zustands, der die Aktivität mindestens eines Fahrzeugs gemäß Anspruch 6 repräsentiert, umfasst. Das Mobilgerät ist so konfiguriert, dass es mit den Zugangspunkten gemäß einem ersten drahtlosen Kommunikationsprotokoll kommuniziert und dass es mit dem Gerät zur Bestimmung eines Zustands, der die Aktivität mindestens eines Fahrzeugs repräsentiert, gemäß einem zweiten drahtlosen Kommunikationsprotokoll kommuniziert.

8. Produktcomputerprogramm mit Anweisungen, die zur Durchführung der Verfahrensschritte gemäß einem der Ansprüche 1 bis 5 geeignet sind, wenn das Computerprogramm von mindestens einem Prozessor ausgeführt wird.

## Claims

1. Method for determining a state representative of the activity of at least one vehicle (11) moving within a covered area (10), said covered area (10) comprising a plurality of access points (101 to 115), said at least one vehicle (11) comprising a mobile device (12) configured to communicate with said plurality of access points (101 to 115) according to a wireless communication protocol, said method comprising the steps of:
- receiving (41) first data representative of signals exchanged with at least a part (111 to 113) of the plurality of access points, said first data being received from said mobile device;
- receiving (42) second data representative of the movement of said mobile device (12), said second data being obtained from at least one accelerometer (37) associated with said mobile device and received from said mobile device;
- determination (43) of the representative state of the activity of said at least one vehicle (11) from said second data, said state being associated with information representative of the location of said at least one vehicle (11) in the covered area (10), the information representative of the location being obtained from said first data and information representative of the location of each access point (111 to 113) of said at least a part of the plurality of access points, **characterized in that** temporal information is associated with said first data and said second data, the temporal information being associated with said state representing the activity of said at least one vehicle (11) and with said information representing the location, and said state representing the activity of said at least one vehicle (11) corresponds to one of the following states:
- an active state corresponding to a movement of said at least one vehicle or to an immobilization of said at least one vehicle for a period less than a threshold value;
- an inactive state corresponding to an immobilization of said at least one vehicle for a period greater than said threshold value.

2. A method according to claim 1, wherein said vehicle is:
- in the active state when the speed of said vehicle is non-zero, said speed being determined from the second data or from said representative location information, or when the speed of said vehicle determined from said representative location information is zero and the second data are non-zero;
- in the inactive state when the second data are zero for a duration greater than said threshold value, or when the speed of said vehicle determined from said representative location information is zero and the second data are zero for a duration greater than said threshold value.

3. Method according to claim 1, wherein said first data comprise information representative of the intensity of the signals exchanged with each access point (111 to 113) of said at least a part of the plurality of access points.

4. A method according to any one of claims 1 to 2, further comprising a step of determining an activity rate of said at least one vehicle (11) from said state representative of the activity of said at least one vehicle over a determined time period.

5. A method according to any one of claims 1 to 3, further comprising a step of generating a map representing the duration and location of the inactive state of said at least one vehicle (11).

6. Device (2) for determining a state representative of the activity of at least one vehicle moving within a covered area, said covered area comprising a plurality of access points, said at least one vehicle comprising a mobile device configured to communicate with said plurality of access points according to a wireless communication protocol, said device comprising a memory (21) associated with at least one processor (20) configured to implement the steps of the method according to any one of claims 1 to 5.

7. System for determining a state representative of the activity of at least one vehicle moving within a covered area, said system comprising a mobile device (12) associated with said at least one vehicle (11), a plurality of access points (101 to 115) arranged spatially in said covered area and a device (100) for determining a state representative of the activity of at least one vehicle according to claim 6, said mobile device being configured to communicate with said plurality of access points according to a first wireless communication protocol, said mobile device being configured to communicate with said device for determining a state representative of the activity of at least one vehicle according to a second wireless communication protocol.

8. Product computer program comprising instructions adapted for carrying out the steps of the process according to any one of claims 1 to 5, when the computer program is executed by at least one processor.
